(19) Europäisches Patentamt
European Patent Office
Office européen des brevets

(11) **EP 4 586 152 A1**

(12) **EUROPEAN PATENT APPLICATION**

(43) Date of publication:
**16.07.2025   Bulletin 2025/29**

(21) Application number: **24154482.4**

(22) Date of filing: **29.01.2024**

(51) International Patent Classification (IPC):
***G06N 10/60*** (2022.01)

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.01.2024   EP 24151665**

(71) Applicants:
• **Siemens Aktiengesellschaft**
**80333 München (DE)**
• **Friedrich-Alexander-Universität Erlangen-Nürnberg**
**91054 Erlangen (DE)**

(72) Inventors:
• **Schmid, Mathias**
**91093 Heßdorf (DE)**
• **Hartmann, Michael**
**82266 Inning (DE)**
• **Braun, Sarah**
**80939 München (DE)**
• **Sollacher, Rudolf**
**84174 Eching (DE)**

(74) Representative: **Siemens Patent Attorneys**
**Postfach 22 16 34**
**80506 München (DE)**

(54) **METHOD FOR DETERMINING AN OPERATIONS SCHEDULE, METHOD FOR MANUFACTURING OR MODIFYING A PRODUCT OR FOR CALCULATION AND QUANTUM COMPUTER**

(57)    The described method is a method for determining an operations schedule that attributes each individual operation of two or more jobs to two or more machines, wherein the operations schedule is subject to an optimization towards an optimum of a key performance indicator indicating the performance of the operations schedule, wherein an operations schedule is initially encoded (S1, S2, S3, S4, S5) into a quantum register of a quantum computer (QC) and the optimization is performed (S6) using a variational quantum algorithm on the quantum computer (QC) acting on the quantum register and wherein an optimized operations schedule is provided (S7) by the quantum computer (QC).

Fig. 1

**Description**

The invention relates to a method for determining an operations schedule and to a method for manufacturing a product and to a method for modifying a product and to a method for calculation and to a quantum computer.

Combinatorial optimization problems are regarded as a promising use case for quantum computing. The intuition behind most considered approaches, such as quantum annealing and the Quantum Approximate Optimization Algorithm (QAOA) is that quantum computers can examine many configurations of the considered variables in parallel and can therefore provide a significant advantage. First demonstrations of quantum algorithms for such tasks have recently been reported for various quantum hardware platforms.

A combinatorial optimization problem, which is of paramount relevance in industry and computation is the so-called job shop scheduling. This job shop scheduling problem (JSP) considers a set of jobs of varying processing times and seeks to schedule these jobs on a set of machines with varying processing capabilities such that the makespan, i. e. the time it takes to complete the last finishing job, is minimized.

The job shop scheduling problem occurs in various contexts, ranging from finding the optimal schedule for a set of production jobs in a given industrial facility to optimizing the scheduling of compute jobs in a computing cluster. By solving the corresponding optimization problem in all these applications, idle times of machines or computers can be reduced, the economic and energetic efficiency of a production or computing cluster can be increased, and transportation systems can operate more reliable at even higher throughput.

Due to its extraordinary relevance, a lot of effort has been put into solving the JSP. Due to the quickly increasing number of variables involved in growing complexity of the problem, solving the JSP with quantum computers is still challenging. Even in case JSPs can be solved, the time associated with practical solutions of practical applications is still too large.

There are already quantum approaches for the JSP, which mainly consider casting the problem into a quadratic unconstrained binary optimization (QUBO) formulation. The most often considered formulation is the time indexed version, where one assigns a set of binary variables to each operation, corresponding to its various possible starting times. This encoding provides the benefit that it can be solved with a quantum annealer. However, for real-world problems, the JSP may still be not in reach for quantum computers due to the required quantum resources. This problem is even more pronounced when generalizing the problem to the flexible job shop problem (FJSP), which is a generalization of the JSP, where the operations within each job can be executed by one of multiple possible machines.

Thus, it is the objective of the invention to provide an alternative method for determining an operations schedule that attributed each individual operation of two or more jobs to two or more machines, wherein the operations schedule is subject to an optimization towards a key performance indicator indicating the performance of the operations schedule. In particular, it would be advantageous if the method according to the invention would be less prone to faulty qubits or the influence of perturbations such as thermal noise.

It is a further objective of the current invention to provide an improved method for manufacturing a product and an improved method for modifying a product and an improved method for calculation.

Furthermore, the invention aims at providing a quantum computer, that is configured to carry out the method according to the invention.

This objective of the invention is solved with a method for determining an operations schedule comprising the features according to claim 1 and with an improved method for manufacturing a product comprising the features according to claim 8 and with an improved method for modifying a product comprising the features according to claim 9 and with an improved method for calculation comprising the features according to claim 10 and with an improved quantum computer comprising the features according to claim 11.

Preferred aspects of the invention are contained in the dependent claims, the following description and the drawings.

The method according to the invention is a method for determining an operations schedule that attributes each individual operation of two or more jobs to two or more machines. In the method according to the invention, the operations schedule is subject to an optimization towards an optimum of a key performance indicator indicating the performance of the operations schedule, wherein an operations schedule is initially encoded into a register of a computer as a bit string using a number system representation that encodes such schedules, preferably predominantly such schedules, in particular only such schedules, that preserve the order of operations of each job and the optimization is performed using a algorithm on the computer acting on the register and wherein an optimized operations schedule is provided by the computer.

In the frame of the current invention, a number system representation that encodes predominantly such operations schedules, that preserve the order of operations of each job means that the number system representation encodes not all operations schedules, that do not preserve the order of operations of each job. Preferably, predominantly in this context means that the number system representation encodes more operations schedules, that preserve the order of operations of each job, than not. Ideally, the number system representation encodes only operations schedules, that preserve the order of operations of each job.

A particular advantage of the method according to the invention is the encoding of the operations schedule as a bit string using a number system representation that encodes predominantly or only such schedules, that preserve the order of operations of each job. In the method according to the invention, the preservance of the order of operations of each job allows encoding the operations schedule with less variables than in previously known algorithms for solving the Job-Shop-Problem. Hence, less variables and - accordingly - less bits are needed for encoding the operations schedule and for optimizing and subsequently determining the optimized operations schedule. With the requirement of less variables, the method according to the invention is less prone to faulty bits or the influence of perturbations such as thermal noise on those bits. Particularly in the field of quantum computing, in which the bits are realized using qubits, the influence of perturbations become crucial, so that the reduction of variables and of qubits, accordingly, constitutes a significant advantage for carrying out the method according to the invention.

A particular advantage of the method according to the invention is given by the applicability of a variational algorithm such as the known Filter-VQE-algorithm for the key performance indicator. The key performance indicator such as the makespan has to be calculated by an algorithm. Therefore, a direct Hamiltonian formulation is not possible for solving the problem of determining the operations schedule. However, the variational algorithm, particularly and more specifically a Filter-VQE-algorithm, advantageously allows for a black box formulation such that the energy values, or likewise the key performance indicator of the operations schedule, and corresponding new circuit parameters can be calculated on a classical computer.

Advantageously, using the method according to the invention, the utilization of the variational algorithm in contrast to conventional known approaches is particularly adapted to the encoding with a number system representation as described above.

In a particularly advantageous aspect of the invention, the computer is a quantum computer, and its register is a quantum register and the variational algorithm is a variational quantum algorithm such as the Filter-VQE-algorithm. In this particular aspect of the method according to the invention, the presumed quantum advantage of quantum computation is utilized to solve Job-Shop-Problems more efficiently as compared to solving it with classical computers. Since the method according to the invention is less susceptible to perturbations than previously known algorithms for solving the Job-Shop-Problem, the method according to the invention can advantageously be carried out less susceptible to perturbations such as thermal noise.

In particularly relevant aspects of the invention, the key performance indicator is a makespan of the operations schedule and the optimum is a minimum makespan. In other relevant variants of the method according to the invention, the key performance indicator is a flow time of the operations schedule, and the optimum is a minimum flow time. In further advantageous variants of the invention, the key performance indicator is a lead time of the operations schedule, and the optimum is a minimum lead time.

Advantageously, the method for determining an operations schedule according to the invention does not relay on casting the problem of determining an operations schedule into a quadratic unconstrained binary optimization (QUBO). As generally known by those skilled in the art, QUBO solutions for existing encodings, e.g., time indexed encodings, to this problem do not scale well with the complexity of the problem, i. e. the number of operations and/or starting times for operations. Thus, either only toy problems could be addressed with the previously known approaches or unrealistic requirements concerning the quantum resources of a quantum computer would be necessary which is either not available or - in turn - with available resources, are not sufficiently fault tolerant. The method according to the invention makes use of a variational quantum algorithm instead which may be formulated with a reduced encoding and thus, in principle, does not require as many qubits for encoding the operations schedules and can thus be realized using significantly less quantum resources. In particular, the encoding allows to exclude those operations schedules, that do not comply with the requirement that operations of a particular job must be executed in a particular order. This requirement will be termed the job precedence constraint in what follows. These operations schedules can thus be encoded in a reduced number system representation that only references operations schedules complying with the job precedence constraint. Hence, the reduced encoding of the operations schedules can be performed with reduced set of quantum bits and the optimization can be performed with a reduced set of quantum operations and quantum gates. Thus, the method according to the invention scales well with the complexity of the problem such as the number of operations and/or starting times for operations. Alternatively, and also advantageously, the method according to the invention allows a quicker determination of the operations schedule particularly for complex problems, since the method scales well with increasing complexity.

In an advantageous aspect of the method according to the invention, the operations schedule is encoded into the quantum register as a bit string based on inversion vectors of the operations schedules. Such inversion vectors, as is generally known in prior art, are arrays of numbers that denote the number of inversions in the permutation for each position in a string representing the operations schedule. Such inversion vectors may then be mapped onto a suitable number system that encodes the operations schedules. In a preferred aspect of the method according to the invention, the number system representation involves a factorial number system representation or an equally compact or more compact number system representation than a factorial number system or the number system representation is based on a factorial number system representation or an equally compact or more compact number system representation than a factorial number system. The term more compact means that less variables are needed for encoding the operations schedule. Equivalently, an equally compact number system representation means a number system representation that needs an equal number of variables.

This aspect of the invention is particularly relevant when inversion vectors are used for encoding the operations schedule as a bit string. Since the elements of the n-element inversion vector of a permutation and the digits of an n-digit number in the factorial number system can both take the same number of possible values, inversion vectors of length n can be easily mapped onto an n digit number in the factorial number system, which in turn can be written as a bit string in its binary representation.

In a preferred aspect of the method according to the invention, the constraint, that operations of a particular job must be executed in a particular order, is considered reducing the factorial number system representation to a reduced factorial number system representation.

In this aspect of the invention, the encoding of the operations schedule can be performed using a particularly small bit-string and thus, the requirement for quantum resources such as qubits and quantum gates can be kept particularly small. Thus in this aspect of the invention, the method and the required quantum resources scale particularly well with the complexity of the problem.

In an advantageous aspect of the method according to the invention, each one of the operations can only be executed on one machine.

This aspect of the invention constitutes a solution for a conventional Job-Shop-Problem.

In an alternative and also advantageous aspect of the invention, one or more operations can be executed on more than one machine.

This aspect of the invention constitutes a solution for a flexible Job-Shop-Problem and can in principle addressed with a similar solution approach as the conventional Job-Shop-Problem.

In the further method according to the invention for manufacturing a product using jobs in the form of manufacturing jobs consisting of operations in the form of manufacturing operations each, and using machines in the form of manufacturing machines, the operations are performed according to an operations schedule, that attributes each individual operation of the jobs to the machines, wherein the operations schedule is determined using the method for determining an operations schedule that attributes each individual operation of two or more jobs to two or more machines according to the invention as described above.

In the further method according to the invention for modifying a product using jobs in the form of modification jobs consisting of operations in the form of modification operations each, and using machines in the form of modification machines, the operations are performed according to an operations schedule, that attributes each individual operation of the jobs to the machines, wherein the operations schedule is determined using the method for determining an operations schedule that attributes each individual operation of two or more jobs to two or more machines according to the invention as described above.

In the method for calculation using jobs in the form of calculation jobs consisting of operations in the form of calculation operations each, and using machines in the form of processors, the operations are performed according to an operations schedule that attributes each individual operation of the jobs to the machines, wherein the operations schedule is determined using the method for determining an operations schedule that attributes each individual operation of two or more jobs to two or more machines according to the invention as described above.

The computer according to the invention is configured to be considered in a method according to the invention as described above. In particular, the computer according to the invention is configured to determine an operations schedule that attributes each individual operation of two or more jobs to two or more machines, wherein the operations schedule is subject to an optimization towards an optimum of a key performance indicator indicating the performance of the operations schedule, wherein the computer comprises a register, that initially encodes an operations schedule as a bit string using a number system representation that encodes only such schedules, that preserve the order of operations of each job, and wherein the computer performs the optimization using an algorithm, particularly a variational algorithm, acting on the register and wherein the computer provides an optimized operations schedule.

In a particularly advantageous aspect of the invention, the computer is a quantum computer, and its register is a quantum register and the algorithm is a quantum algorithm, particularly a variational quantum algorithm such as the Filter-VQE-algorithm.

Preferably, the computer according to the invention is configured to determine the operations schedule when programmed with a computer program and/or computer algorithm running on the computer. Advantageously, the computer program is a quantum computer program, wherein the computer is a quantum computer. The quantum computer may, in a preferred aspect of the invention, be configured to perform the steps as outlined above when running such a computer program and/or computer algorithm.

In the following, preferred aspects of the invention are explained with the help of the drawings in more detail.

**Problem Definition**

A job shop scheduling problem consists of a set of $N_{\text{jobs}}$ jobs $\mathcal{J} = \{J_1, \cdots, J_{N\text{jobs}}\}$ which are to be scheduled on a set of $N_{\text{ma}}$ machines $\mathcal{M} = \{M_1, \cdots, M_{Nma}\}$. Each job $J_i$ consists of a sequence of $n_i$ operations that must be executed in predefined order,

$$J_i = \{O_{k_{i-1}+1} \to \cdots \to O_{k_i}\} \text{ for } i = 1, \ldots, N_{\text{jobs}} \quad (1)$$

where we use an enumerating of the operations in lexicographical order, c.f. [1], and $n_i = k_i - k_{i-1}$. The predefined order in eq. (1) is called the job precedence constraint.

Each operation $o_i$ has a corresponding execution time $p_{i,l}$, that depends on the machine $M_l$ it is executed on. We denote the set of execution times as $P$. Each operation $O_i$ has to be executed by one machine from an operation specific set,

$$\mu_i = \{M_{i,1}, M_{i,2}, \cdots\}; M_{i,j} \in \mathcal{M},$$

There are two versions of the problem. In the standard job shop scheduling problem (JSP), there is only one machine for each operation that can execute it, $|\mu_i| = 1$. In contrast for the flexible job shop scheduling problem (FJSP), there are operations that can be executed on multiple machines, $|\mu_i| \geq 1$.

The objective of the problem is to find a schedule of operations and a choice for the machines such that the finishing time of the last job is minimal. This time is called the makespan $C_{\text{max}}$. We denote the finishing times of the individual jobs $J_i$ by $C_i$ such that $C_{\text{max}} = \max_{i \in \{1, \cdots, N\text{jobs}\}} C_i$.

There are alternative objective functions for FJSP which we will not elaborate upon [8, 10]. We additionally make the following, rather natural assumptions:

1. All machines are available at time zero and all jobs can start at time zero.
2. The order of operations in each job is predefined and cannot change, see eq. (1).
3. Operations of different jobs have no precedence constraint among each other and can also be processed in parallel.
4. The execution times for all operations on each machine are defined in advance.
5. A job can use a machine more than once.
6. Each machine can only work on one operation at a time. This is the machine constraint
7. A machine cannot be interrupted during the execution of a operation.

After having introduced the job shop problems we consider, we now turn to discuss how to efficiently encode them into qubits on a quantum computer.

**Encoding**

To represent a combinatorial optimization problem on a quantum computer, one typically needs one qubit for each variable of the problem. Hence formulating the problem with as few variables as possible is very beneficial. Here we introduce an encoding for FJSPs (and JSPs), that is much more variable efficient than previously considered encodings [1]. The encoding is based on a operation sequencing list $s$[2, 3], which orders all operations together with the machines they are executed on, where $N_{\text{op}}$ is the total number of operations, $\pi$ a permutation of the operations that leads to the schedule and $M_{\pi(i),ji} \in \mu_{\pi(i)}$. Starting from the left, each operation in s is executed on a corresponding machine as early as possible, i.e. when the machine becomes available or the preceding operation in the same job has been completed. This way of writing a schedule allows for a less variable intensive encoding than the widely used time index version [1]:

$$S = (O_{\Pi(1)}, M_{\Pi(1),j_1}), (O_{\Pi(2)}, M_{\Pi(2),j_2}), \ldots, (O_{\Pi(N_{\text{op}})}, M_{\Pi(N_{\text{op}}),j_{N\text{op}}}). \quad (2)$$

Note that often encodings are chosen, for which the resulting cost function can be written in the quadratic unconstrained binary optimization (QUBO) formulation [24]. Such encodings allow one to define a Hamiltonian representing a quantum analog of the classical cost function, which can be used as a generator of quantum gates for a quantum algorithm, e.g. the quantum approximate optimization algorithm (QAOA). In order to ensure that the job precedence constraint eq. (1) is fulfilled, such approaches however need to add a penalty term to the cost function.

Here we will use a filtering variational quantum eigensolver algorithm (Filter-VQE-algorithm), see below, as a quantum optimization algorithm, which does not require formulating the cost function of the problem as a Hamiltonian. This flexibility allows for a more efficient encoding in terms of variable number.

In the following we will describe how to efficiently encode the sequenced based schedule such that the job precedence constraint in eq. (1) is resolved automatically, instead of adding a penalty term in the cost function.

Since allowing only one ordering within each job is equivalent to considering all orderings within the job as indistinguishable and counting them as only one possibility, the number of schedules that respect the job precedence constraint is equal to the number of permutations of $N_{op}$ operations, where all operations within each job are treated as if they were identical. The number of valid schedules for the JSP, where each operation can only run on one machine, is thus given by the multinomial

Coefficient

$$\binom{N_{\mathrm{op}}}{|J_1|,\ldots,|J_{N_{\mathrm{jobs}}}|} = \frac{N_{\mathrm{op}}!}{\prod_k |J_k|!} \quad .$$

For the FJSP, one then obtains the total number of valid schedules by multiplying with the number of possible machines for each operation, $\prod_i |\mu_i|$. As a result, the encoding we introduce only requires the following qubit numbers,

$$N_{\mathrm{qubits}} = \left\lceil \log_2 \left( \frac{N_{\mathrm{op}}!}{\prod_k |J_k|!} \right) \right\rceil \quad \texttt{for the JSP (3)}$$

$$N_{\mathrm{qubits}} = \left\lceil \log_2 \left( \frac{N_{\mathrm{op}}!}{\prod_k |J_k|!} \prod_i |\mu_i| \right) \right\rceil \quad \texttt{for the FJSP} \quad (4)$$

One could reduce the number of required variables further by breaking inherent symmetries. For example, two adjacent operations in $s$, that are in different jobs and are executed on different machines are interchangeable. i.e. $\cdots (O_i, M_{qi,j}), (O_k, M_{qk,l}) \cdots \equiv \cdots (O_k, M_{qk,l}), (O_i, M_{qi,j}) \cdots$. The encoding we introduce, is optimal in terms of variable efficiency up to these possible symmetry reductions. Most importantly we resolve all problem constraints via the encoding and thus do not need any penalty terms in the cost function to enforce these. Due to these properties, our encoding provides a significant improvement in terms of variable efficiency.

For example, the time index version, without variable pruning, requires $N_{op}T$ binary variables, where $T$ is the number of discrete time steps at which an operation can start. $T$ can be lower bounded by the largest sum of execution times for an individual job, which itself is a lower bound for the makespan. After variable pruning the required number of qubit is

$$N_{\mathrm{qubits}}^{\mathrm{ind}} = N_{\mathrm{op}} T - \sum_i \sum_l (p_l |J_i| - 1) \qquad (5)$$

with $i \in \{1, N_{\mathrm{jobs}}\}$ and $l \in \{k_{i-1} + 1, \ldots, k_i\}$. In contrast, the required number of qubits in our encoding is independent of the resolution used to measure the durations of the individual operations.

Thus when considering the common example of a JSP with $N$ jobs, where each job consists of $N$ operations, i.e. $N_{op} = N^2$, the encoding strategy we introduce requires $N_{\mathrm{qubits}} = \left\lceil \log_2 \left( N^2! / \{ (N!^N) \} \right) \right\rceil \approx N^2 \log_2 N$, whereas the number of qubits for the time indexed version is proportional to $<p> N^3 + N^2$, where $<p>$ is the average of all $p_i$. Hence our encoding requires a factor of $\sim N^{-1} \log_2 N$ less qubits. When considering a fixed $N_{\mathrm{jobs}}$, the system size grows only with job size $|J_i| = N$, and our qubit count scales linerly with N compared to $N^2$ for the time indexed version.

Note that the derived map could also be used to represent possible travel routes of the traveling salesman problem as permutations. For this representation it would only require $\left\lceil \log_2(n!) \right\rceil \sim n \log_2(n) - n$ qubits for routes through $n$ cities, instead of the $n^2$ qubits needed in existing representations.

## Labeling Permutations with bit-strings

After having determined the number of binary variables or qubits needed to enumerate all schedules that respect the job constraint, c.f. eq. (1), we now introduce the bijective mapping between bit-strings and valid schedules. We first encode the order of operations under the assumption of $|\mu_i| = 1 \forall i$, corresponding to the JSP case, into a bit-string before resolving the job constraint of eq. (1) in section 'Resolving the Job Precedence Constraint' and generalizing to the case with $|\mu_i| \neq 1 \forall i$ in section 'Operations with Multiple Possible Machines' .

If we number the operations with labels $i \in \{1 \cdots N_{op}\}$, their position $s(i)$ in a schedule can be described by a permutation, $s(i) = \pi^{-1}(i)$. We denote the set of all schedules by $\mathcal{S}(\{1, \cdots, N_{op}\}) = \mathcal{S}_{N_{op}}$. This set also contains schedules that do not obey eq. (1) and is thus identical to the set of permutations, i.e. the symmetric group. There are $N_{op}!$ unique schedules (permutations) in $\mathcal{S}_{N_{op}}$. To identify each schedule uniquely with a quantum state of a quantum processor, we need $\lceil \log_2(N_{op}!) \rceil$ qubits and a map from their bitstring space $\{0,1\}^{\lceil \log_2(N_{op}!) \rceil}$ to the set of possible schedules. We construct this map with the help of the inversion vectors of permutations and the factorial number system via the following three steps.

(i) Each schedule or permutation can be unambiguously identified by its inversion vector, an array of numbers that denote the number of inversions in the permutation for each position [4]. Since (ii) the elements of the n-element inversion vector of a permutation and the digits of an n-digit number in the factorial number system [4] can both take the same number of possible values, one can label each inversion vector of length n unambiguously with an n digit number in the factorial number system. Finally, (iii) each number in the factorial number system is a representation of an integer number, which can also be written as a bit-string in its binary representation. Taking all these identifications together, we get a one-to-one mapping between the bit-strings represented on the qubits and the permutations which identify the schedules. These steps are illustrated in table I for a simple example. We now explain the mapping in more detail, starting with a discussion of the required inversion vectors, which also permit a very elegant formulation of the job precedence constraint in eq. (1) .

**Inversion vector**

To map a bit-string to a permutation, we make use of an intermediate step, the so-called inversion vector $I(\pi) = (b_1, \cdots, b_{Nop})$ with $b_j = \# \{k \mid k > j \wedge \pi^{-1}(k) < \pi^{-1}(j)\}$ [4] . In the tuple representation of $rr$, i.e. the array $(\ldots, \pi(j), \pi(j+1), \ldots)$, the value of $b_j$ denotes the number of elements to the left of $j$ that are larger than $j$. Importantly the elements $b_j$ of $I(\pi)$ fulfill $b_j \leq N_{op} - j$. (We will make use of this property later). Conversely, given the inversion vector $I(\pi)$ one can retrieve the permutation $\pi$ by iteratively determining the relative position of the numbers (which enumerate the operations) . Starting from $N_{op}$, for $j = N_{op}, N_{op} - 1, \cdots, 1$, each $b_j$ determines the position of $j$ in the respective iteration, where positions are counted from the left starting from 0 (i.e. $b_j = 0$ is the first and $b_j = 1$ the second position etc.). This is also illustrated in table II for the same example.

Hence each permutation can be unambiguously identified by its inversion vector and vice versa [4]. For representing the problem on qubits, we further need a map from the set of bit-strings $\{0,1\}^{\lceil \log_2(N_{op}!) \rceil}$ to the inversion vectors. This can be achieved by using the factorial number system (FNS).

**Factorial Number System**

The representation of a positive integer $x \in N$ in the factorial number system (FNS) [4] is composed of n digits with $n! > x > (n-1)!$ and has the form

$$x = \sum_{k=1}^{n} c_k(k-1)! \ , \ \text{where } 0 \leq c_k < k \qquad (6)$$

Here $k$ is also called the base for $c_k$. As for each number system, one can convert an integer number into the factorial number system by iteratively dividing by the base $k$, taking the remainder as the digit $c_k$ and continuing with the obtained integer quotient, until this quotient becomes 0. Here we want to use an FNS number to count all possible permutations of $N_{op}$ operations and thus choose $n = N_{op}$.

The $k$-th digit of an FNS number can take on $k$ possible values, see eq. (6). The same holds for the inversion vector element $b_j$ with $j = N_{op}-(k-1)$, where $j,k = 1,...,N_{op}$. Therefore the elements $b_j$ are equivalent to the digits $c_k$, and we identify

$$b_j = c_{N_{op}-(j-1)} . \qquad (7)$$

This identification, which is illustrated further in table III, allows one to use FNS numbers and inversion vectors interchangeably to label permutations unambiguously.

Taking the above steps together, we thus have a complete map from $\{0,1\}^{\lceil \log_2(N_{\mathrm{op}}!)\rceil}$ to $S(\{1,\cdots,N_{\mathrm{op}}\})$. An example is provided in table I. We use this mapping to represent a schedule as a basis state of a register of qubits, e.g. $|111101\rangle$ for the example above.

Note that up to this point we still consider all permutations/schedules, i.e. we also include schedules that do not obey eq. (1). A modification of the above mapping that excludes invalid schedules will be presented below.

**Resolving the Job Precedence Constraint**

In the problems we consider, the order of the operations in one job is fixed and cannot be changed, c.f. eq. (1). A possible choice to avoid this would be to introduce a penalty term in the cost function for invalid schedules. We introduce here a more resource-efficient encoding that resolves the job precedence constraint of eq. (1), within the encoding instead. This saves resources since less qubits are needed on the quantum device. To resolve the constraint of eq. (1), we first need to translate it into the FNS.

The job precedence constraint says that $\pi^{-1}(j)\le\pi^{-1}(j+1)$ must hold for all $j$ and $j+1$ in the same job. This translates to the constraint $b_{j+1}\ge b_j$ for the corresponding inversion vector elements, as we show in later. Since we want to use these constraints to reduce the code space, we need a new map from bitstrings to schedules that only counts the subset of allowed schedules. To this end, we first determine the number of allowed schedules for given jobs.

For a job $J_i = \{O_g,...,O_{g+l}\}$. c.f. eq. (1) for $g = k_{i-1} +1$ and $g+l = k_i$, there are the associated inversion vector elements

$b_g,\cdots,b_{g+l}$. Since each $b_j$ can take on $N_{\mathrm{op}}-j+1$ possible values, there are $\prod_{j=g}^{g+l}\left(N_{\mathrm{op}} - j + 1\right)$ possible values for the inversion vector elements corresponding to the job $J_i$. For a job of size $l+1$ the number of valid permutations is reduced by a factor $(l+1)!$ since there are $(l+1)!$ permutations of the operations within the job, of which only one is allowed. Since the constraint of a job $J_i$ only affects the digits in $b_g,\cdots,b_{g+l}$, there are

$$N_{\mathrm{digit}}\left(\{b_g,\cdots,b_{g+l}\}\right) = \frac{1}{(l+1)!}\prod_{j=g}^{g+l}\left(N_{\mathrm{op}} - j + 1\right) \quad (8)$$

possible values for these digits and one can obtain the total number of allowed schedules by multiplying the vlaues of $N_{\mathrm{digit}}$ for all jobs.

$$\prod_i N_{\mathrm{digit}}(J_i) = \frac{N_{\mathrm{op}}!}{\prod_k |J_k|!} \quad (9)$$

Having determined the number of allowed schedules for a given set of jobs, we now turn to enumerate these allowed schedules with an appropriate number system. A suitable number system is provided by the representation

$$x = \sum_{i=1}^{N_{\mathrm{jobs}}} r_i \prod_{m=1}^{i-1} N_{\mathrm{digit}}(J_m), \quad (10)$$

where $0 \le x \le \prod_i N_{\mathrm{digit}}(J_i) - 1$ and the role of the factorials in eq. (6) is now taken by the products $\prod_{m=1}^{i-1} N_{\mathrm{digit}}\left(J_{N_{\mathrm{jobs}}-m+1}\right)$. Note that since $\prod_{m=1}^{i} N_{\mathrm{digit}}(J_m) > \prod_{m=1}^{i-1} N_{\mathrm{digit}}(J_m)$, this is indeed a working number system, where all $r_i$ can be unambiguously determined. We call the representation in eq. (10) reduced FNS. To obtain the values of the $r_i$, one follows a similar procedure as for the FNS and divides $x$ iteratively by the job sizes $N_{\mathrm{digit}}(J_i)$, which play the role of the base here, taking the remainders of the division as the $r_i$ and continuing with the obtained quotient. Each of the resulting $r_i \in \{0,...,N_{\mathrm{digit}}(J_i) - 1\}$ in eq. (10) thus enumerates the allowed values for the string $b_g,\cdots,b_{g+l}$ associated to job $J_i$. We could use this to enumerate all schedules in a reduced FNS. Yet we still need to identify each value of $r_i$ with a specific allowed string $b_g,\cdots,b_{g+l}$.

We do this by determining the values $b_j$ iteratively, starting with $b_g$. Its value $b_g^*$ needs to be chosen such that the number of allowed strings $b_g,\cdots,b_{g+l}$ summed up for all $b_g \le b_g^* - 1$ is smaller or equal to $r_i$ and the number of allowed strings $b_g,\cdots,b_{g+l}$ when including $b_g \ge b_g^*$ summed up is larger than $r_i$. There are $N_{\mathrm{digit}}(\{b_{g+1},...,b_{g+l}\})$ strings with $b_g = 0$. For $b_g = 1$ we have the additional constraint that $b_j \ne 0$ for $j = g + 1, ..., g + l$. Since each $b_j$ can take on $N_{\mathrm{op}} - j + 1$ possible

values, the number of possible strings with $b_g = 1$ is identical to $N_{\text{digit}}(\{b_{g+2},..., b_{g+l+1}\})$. This observation can be iterated across all values for $b_g$, where the number of possible strings for each $b_g$ is $N_{\text{digit}}(\{b_{g+1+bg},...,b_{g+l+bg}\})$. We thus get $b^*_g$ from the formula,

$$\widetilde{N}\left(g, 1, l, b_g^* - 1\right) \le r_i < \widetilde{N}\left(g, 1, l, b_g^*\right) \qquad (11)$$

where $\widetilde{N}(g, k, l, h) = \sum_{m=0}^{h} N_{\text{digit}}\left(\{b_{g+k+m}, \cdots, b_{g+l+m}\}\right)$ counts the allowed number of strings for $b_{g+k-1} \le$ $h$. The remaining $b_j^* \ge b_{j-1}^*$ for $j \in \{g + 1, ... , g + l\}$ can be found via

$$\widetilde{N}\left(g, k, l, b_j^* - 1\right) \le r_i - \sum_{m=0}^{j-g-1} \widetilde{N}\left(g, m + 1, l, b_{g+m}^* - 1\right) < \widetilde{N}\left(g, k, l, b_j^*\right) \qquad (12)$$

where $k = j - g + 1$ This procedure of determining the values $b_j^*$, is also illustrated with an example of a job of size 3 in table IV. After resolving the job precedence constraint, the number of required qubits for a JSP problem with $|\mu_i| = 1 \,\forall i$ is given by eq. (3).

**Operations with Multiple Possible Machines**

Up to this point we considered the reduced problem with $|\mu_i| = 1 \,\forall i \in \{1, \cdots, N_{\text{op}}\}$, i.e. every operation has exactly one machine that can execute it. We will now look at the more general case with $|\mu_i| \in \{1, \cdots, N_{\text{ma}}\}$. This implies that for every fixed schedule, i.e. permutation of operations, there are now $\Pi_i|\mu_i|$ possibilities for machine configurations. So the number of required qubits is given by eq. (4).

Thus, we need a map from the binary system to a valid permutation and a valid machine configuration. To this end one converts the binary number to a decimal and divides by $\Pi_i|\mu_i|$. The integer quotient is used to determine the permutation of the operations as described in the previous section and the remainder $r$ is used to get the machine configuration. Similar to the FNS we can interpret the cardinality of the sets $\mu i$ as a mixed base number system. So we divide the remainder r by $|\mu_1|$ and the remainder $r_1$ is the $r_1$-th element in $\mu_1$. The integer quotient is then divided by $|\mu_2|$ and so forth.

**Cost Function**

The cost function we want to optimize is the makespan as defined in eq. (14), which is equal to the finishing time of the last active job (the latter is not necessarily the last job in the sequence). To evaluate the makespan of a given schedule we will use an algorithm, which iteratively determines the starting times of each operation within the schedule before adding the respective execution times and taking the maximum. The procedure will be illustrated via an example.

Assume we have two jobs $J_1 = \{O_1, O_2, O_3\}$ and $J_2 = \{O_4, O_5\}$ with five operations in total, two machines $M = \{M_1, M_2\}$ and the execution times $p_j = 1,2,2,1,1$ for each operation $o_j$ ($j = 1,...,5$). We want to get the makespan for an example schedule,

$$S = (O_1, M_1), (O_2, M_2), (O_4, M_1), (O_3, M_1), (O_5, M_2)$$

We first need to get the starting times $ts(j)$ of the operations $o_j$ for each position $s$ in the schedule.

- The schedule starts with $O_1$ at $t1(1) = 0$
- The operation in sequence position two s = 2, here $O_2$, can either start at the beginning, $t_2(2) = 0$, or is delayed by the first operation due to job or machine constraint, i.e. one has to wait until the preceding operation in the job has finished, or the machine is still in use. In our case the starting time is delayed by the job constraint to $t_2(2) = 1$.

- The third place operation s = 3, here $O_4$, can either start at the beginning or is again delayed. The delay could again either be induced by the job constraint or the machine constraint. Here we have $t_3(4) = 1$ since $M_1$ was in use.

Hence for operation $O_j$ in position $s(j) = i$, the starting time $t_i(j)$ is given by

$$t_i(j) = \max(t_f(j - 1), t_{fm}) \quad (13)$$

where $t_f(j\text{-}1)$ is the time at which operation $o_{j-1}$ finishes if it is in the same job (otherwise we choose $t_f(j\text{-}1) = 0$), and $t_{fm}$ is the time at which the last operation that runs on the same machine as $O_j$ finishes. eq. (13) thus allows to iteratively determine all $t_i(j)$. After determining the starting times we add their execution times and take the maximum, which results in the makespan,

$$C_{\max} = \max_j[t_i(j) + p_j] \quad (14)$$

**Proof of job precedence constrain for inversion vectors**

*Proof.* We first show that $b_{j+1} \geq b_j$ for all cases, where $\pi^{-1}(j) < \pi^{-1}(j+1)$ : For all $i$ that generate inversions with $j$, i.e. $\forall i \in \{i \mid i > j \wedge \pi^{-1}(i) < \pi^{-1}(j)\}$, it follows that

- $i > j+1$ since $i \neq j+1$ because $\pi^{-1}(j) < \pi^{-1}(j+1)$ per definition,
- $\pi^{-1}(i) < \pi^{-1}(j + 1)$ since $\pi^{-1}(i) < \pi^{-1}(j)$ and $\pi^{-1}(j) < \pi^{-1}(j + 1)$ .

Hence every $i$ that generates an inversion with $j$ also generates an inversion with $j + 1$. Per definition of the inversion vector, this implies $b_{j+1} \geq b_j$.

It remains to show that $b_j > b_{j+1}$ whenever the constraint $\pi^{-1}(j) < \pi^{-1}(j+1)$ is violated: For all $i$ that generate inversions with $j+1$, i.e. $\forall i \in \{i \mid i > j+1 \wedge \pi^{-1}(i) < \pi^{-1}(j + 1)\}$, it follows that

- $i > j$ since $j + 1 > j$
- $\pi^{-1}(i) < \pi^{-1}(j)$ since $\pi^{-1}(i) < \pi^{-1}(j + 1)$ and $\pi^{-1}(j + 1) < \pi^{-1}(j)$

This implies $b_j \geq b_{j+1}$. Furthermore, since $\pi^{-1}(j + 1) < \pi^{-1}(j)$ per definition, which increases the inversion count of $j$ by 1, it follows that $b_j > b_{j+1}$.

**Filter-VQE-algorithm**

Since the FJSP is a combinatorial optimization problem, and we use a variational quantum algorithm for solving it, we need an optimization strategy for our algorithm. Due to its recent success in this field and its ability to be used for black box Hamiltonians, we chose to use the Filtering Variational Quantum Eigensolver algorithm (Filter-VQE-algorithm). This algorithm optimizes a parameterized quantum circuit to approximate the action of a filter operator.

**Filtering operators**

Given a Hamiltonian $H$, note that in our case we will be using a black-box Hamiltonian as specified in section 'cost function', a filtering operator $F \equiv f(H; \tau)$ is defined by the real-valued function $f(E; \tau)$, where $E$ is the energy and $\tau > 0$. The square of this function is required to be strictly decreasing for the energy range $E \in [E_{\min}, E_{\max}]$.

Given a state $|\psi\rangle$ the probability to measure an eigenstate $|\lambda_x\rangle$ is $P_\psi(\lambda_x) = |\langle\psi|\lambda_x\rangle|^2$. Applying the filtering operator

$$|F\psi\rangle = F|\psi\rangle / \sqrt{\langle F^2\rangle_\psi}$$

yields the state , which now has a new probability distribution

$$P_{F\psi}(\lambda_x) = \frac{f^2(E_x; \tau)}{\langle F^2\rangle_\psi} P_\psi(\lambda_x) \quad (28)$$

with an increased probability to measure eigenstates with $f^2(E_x; \tau) > \langle F^2\rangle_\psi$, and hence increased amplitude of energetically low lying eigenstates. If the state $\psi$ has a finite overlap with the ground state, applying the filtering operator often enough results in a projection on the ground state. We will here be using $f(H; \tau) = H^{-\tau}$ as our filtering operator.

**Core of the Algorithm**

The iterative algorithm starts at iteration step $t = 0$ and prepares the initial state $|\psi_0\rangle = |+\rangle^{\otimes n}$, where $n$ is the number of qubits. This state has finite overlap with the ground state. We want to approximate the repeated action of a filtering operator on it. At each optimization step $t \geq 1$ we approximate the action of a filtering operator $|F_t\psi_{t-1}\rangle$ resulting in state $|\psi_t\rangle$. Note that the filtering operator can change in each optimization step $t$. The algorithm terminates after a prespecified number of iteration steps and uses, a parameterized quantum circuit ansatz $|\psi(\theta)\rangle$, depending on $m$ variational parameters $\theta = (\theta 1, \cdots, \theta m)$.

In a given optimization step $t$ one minimizes the Euclidean distance

$$C_t(\theta) = \frac{1}{2} |||\psi(\theta)\rangle - |F_t\psi_{t-1}\rangle||^2 = \frac{1 - \mathrm{Re}\langle\psi_{t-1}|F_t|\psi(\theta)}{\sqrt{\langle F_t^2 \rangle_{\psi_{t-1}}}} \quad (29)$$

where the parameters found in this optimization process define $|\psi_t\rangle \equiv |\psi(\theta_t)\rangle$. To optimize the cost function in eq. (29), the Filter-VQE-algorithm uses a gradient-based procedure, where the partial derivative of the cost function evaluated at the current vector of

$$\frac{\partial C_t(\theta)}{\partial \theta_j}\Big|_{\theta_{t-1}} = -\frac{\langle F_t \rangle_{\psi_{t-1}}^{j+} - \langle F_t \rangle_{\psi_{t-1}}^{j-}}{4\sqrt{\langle F_t^2 \rangle_{\psi_{t-1}}}} \quad (30)$$

The three states $|\psi_{t-1}\rangle$ and $\left|\psi_{t-1}^{j\pm}\right\rangle \equiv \left|\psi\left(\theta_{t-1} \pm \frac{\pi}{2}e_j\right)\right\rangle$ are generated by a circuit (not shown) with different parameters. The optimization at fixed $t$ is then completed by a single gradient-descent update:

$$\theta_t = \theta_{t-1} - \eta \sum_{j=1}^{m} \frac{\partial(C_t\{\theta\})}{\partial \theta_j}\Big|_{\theta_{t-1}e_j} \quad (31)$$

Here $\eta > 0$ is the learning rate, which is set in each iteration step to inverse of the cost function's Hessian diagonal. For each optimization step $t$ the update in eq. (31) requires the preparation of $2m + 1$ circuits. Sampling eigenstates $|\lambda_x\rangle$ for $M_x$ times leads to the approximation of the expectation values as:

$$\langle F_t \rangle_{\psi} \approx \frac{1}{M} \sum_x M_x f(E_x; \tau) \quad (32)$$

**Adapting the step size**

To ensure that the gradient norm $g(\tau) = \|\nabla C_t(\tau)|\theta_{t-1}\|$ does not vanish, the parameter r is adapted at every optimization process. At the beginning one sets a control value $g_c > 0$. Since $F(H;0) = 1$ we know that $g(0) = 0$. We start at $\tau = 0$ and increases the value of r until $g(\tau) > g_c$ or g converges at a constant. We then choose the value for $\tau$ that results in a value of $g$ closest to the control value

**Further methods according to the invention**

The previously described method optimizes a operations schedule with respect to the makespan. The described method may be used in a method for manufacturing a product as described below. The jobs may be in the form of manufacturing jobs that consist of operations in the form of manufacturing operations each. The machines may be manufacturing machines and the operations are performed according to the operations schedule determined by using the method as described above. In alternative embodiments, the described method may be used in a method for modifying a product. The operations thus may be modifying operations and the machines may be modifying machines, instead. In further alternative embodiments, the described method may be used in a method for computation. The operations may be computation operations and the machines may be processors configured for carrying out computation operations. The operations schedule is likewise determined by using the method as described above.

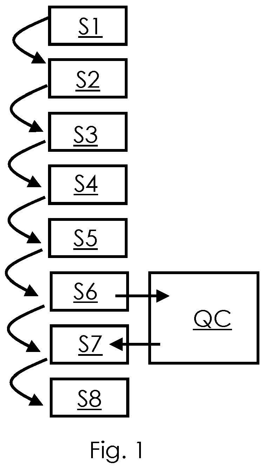

The respective steps during carrying out the invention are briefly sketched in Fig. 1. Here, in step S1, the schedule is transformed to a formal representation of the schedule. In step S2, an inversion vector is attributed to the representation. In step S3, the inversion vectors are mapped onto the reduced factorial number system. In step S4, the factorial number system is written in binary form resulting in a bit-string. The bit-string is inscribed into a quantum register of a quantum computer QC, which constitutes step S5. In step S6, the quantum computer is operated to perform a variational quantum algorithm and optimize the quantum register towards a bit-string representing the optimum operations schedule with respect to the makespan. In step S7, the bit-string is received by the quantum computer QC as an output and in step S8, the operations schedule encoded by the final optimized bit-string is followed by conducting the operations according to the operations schedule.

The quantum computer QC is configured to perform the steps as described above with a program, that runs on the quantum computer QC.

Prior Art References

[1] D. Venturelli, D. J. J. Marchand, and G. Rojo, Quantum Annealing Implementation of Job-Shop Scheduling, arXiv e-prints, arXiv:1506.08479 (2015), arXiv:1506.08479 [quant-ph].

[2] F. Pezzella, G. Morganti, and G. Ciaschetti, A genetic algorithm for the flexible job-shop scheduling problem, Computers & Operations Research 35, 3202 (2008), part Special Issue: Search-based Software Engineering.

[3] I. Kacem, S. Hammadi, and P. Borne, Approach by localization and multiobjective evolutionary optimization for flexible job-shop scheduling problems, IEEE Transactions on Systems, Man, and Cybernetics, Part C (Applications and Reviews) 32, 1 (2002).

[4] D. Knuth, The Art of Computer Programming (AddisonWesley Pub. Co., 1973).

## Claims

1. Method for determining an operations schedule that attributes each individual operation of two or more jobs to two or more machines, wherein the operations schedule is subject to an optimization towards an optimum of a key performance indicator indicating the performance of the operations schedule, wherein an operations schedule is initially encoded (S1, S2, S3, S4, S5) into a register of a computer (QC) as a bit string (S1, S2, S3, S4, S5) using (S4) a number system representation that encodes such schedules, that preserve the order of operations of each job and the optimization is performed (S6) using an algorithm on the computer (QC) acting on the register and wherein an optimized operations schedule is provided (S7) by the computer (QC).

2. Method according to claim 1, wherein the computer (QC) is a quantum computer and its register is a quantum register and the variational algorithm is a variational quantum algorithm, particularly a Filter-VQE-algorithm.

3. Method according to claim 1, wherein the key performance indicator is a makespan and the optimum is a minimum makespan or wherein the key performance indicator is a flow time and the optimum is a minimum flow time or wherein the key performance indicator is a lead time and the optimum is a minimum lead time.

4. Method according to one of the preceding claims, wherein the number system representation involves a factorial number system representation or an equally compact or more compact number system representation than a factorial number system.

5. Method according to one of the preceding claims, wherein the number system representation involves a reduced factorial number system representation.

6. Method according to one of the preceding claims, wherein each one of the operations can only be executed on one machine.

7. Method according to one of the preceding claims, wherein one or more operations can be executed on more than one machine.

8. Method for manufacturing a product using jobs in the form of manufacturing jobs consisting of operations in the form of manufacturing operations each, and using machines in the form of manufacturing machines, wherein the operations are performed (S8) according to an operations schedule, that attributes each individual operation of the jobs to the machines, wherein the operations schedule is determined using a method according to one of the claims 1 to 7.

9. Method for modifying a product using jobs in the form of modification jobs consisting of operations in the form of modification operations each, and using machines in the form of modification machines, wherein the operations are performed according to an operations schedule, that attributes each individual operation of the jobs to the machines, wherein the operations schedule is determined using a method according to one of the claims 1 to 7.

10. Method for calculation using jobs in the form of calculation jobs consisting of operations in the form of calculation operations each, and using machines in the form of processors, wherein the operations are performed according to an operations schedule that attributes each individual operation of the jobs to the machines, wherein the operations schedule is determined using a method according to one of the claims 1 to 7.

11. Quantum computer, configured to determine an operations schedule that attributes each individual operation of two or more jobs to two or more machines, wherein the operations schedule is subject to an optimization towards an optimum of a key performance indicator indicating the performance of the operations schedule, wherein the quantum computer comprises a quantum register, that initially encodes (S1, S2, S3, S4, S5) an operations schedule, and wherein the quantum computer performs (S6) the optimization using a variational quantum algorithm acting on the quantum register and wherein the quantum computer provides (S7) an optimized operations schedule (S7).

Fig. 1

Europäisches
Patentamt

European
Patent Office

Office européen
des brevets

# EUROPEAN SEARCH REPORT

Application Number

EP 24 15 4482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRANGE CAMILLE ET AL: "Moderate Exponential-time Quantum Dynamic Programming Across the Subsets for Scheduling Problems", , [Online] 20 November 2023 (2023-11-20), XP093187688, Retrieved from the Internet: URL:https://hal.science/hal-04296238v1/document> [retrieved on 2024-07-19] * abstract * * page 4 - page 47 * | 1-11 | INV. G06N10/60 |
| A | AMARO DAVID ET AL: "Filtering variational quantum algorithms for combinatorial optimization", QUANTUM SCIENCE AND TECHNOLOGY, [Online] vol. 7, no. 1, 10 February 2022 (2022-02-10), page 015021, XP093187841, ISSN: 2058-9565, DOI: 10.1088/2058-9565/ac3e54 Retrieved from the Internet: URL:https://arxiv.org/pdf/2106.10055> [retrieved on 2024-07-19] * the whole document * | 1-11 | |

| | | | TECHNICAL FIELDS SEARCHED (IPC) |
|---|---|---|---|
| | | | G06N |

The present search report has been drawn up for all claims

| Place of search | Date of completion of the search | Examiner |
|---|---|---|
| The Hague | 19 July 2024 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. VENTURELLI** ; **D. J. J. MARCHAND** ; **G. ROJO**. *arXiv:1506.08479*, 2015
- **F. PEZZELLA** ; **G. MORGANTI** ; **G. CIASCHETTI**. A genetic algorithm for the flexible job-shop scheduling problem. *Computers & Operations Research*, 2008, vol. 35, 3202
- **I. KACEM** ; **S. HAMMADI** ; **P. BORNE**. Approach by localization and multiobjective evolutionary optimization for flexible job-shop scheduling problems. *IEEE Transactions on Systems, Man, and Cybernetics, Part C (Applications and Reviews*, 2002, vol. 32 (1)
- **D. KNUTH**. The Art of Computer Programming. AddisonWesley Pub. Co, 1973